Europäisches Patentamt

European Patent Office

Office européen des brevets

(19)

(11) EP 1 113 514 A1

(12) EUROPEAN PATENT APPLICATION

(43) Date of publication:
04.07.2001 Bulletin 2001/27

(51) Int Cl.$^7$: H01M 4/48, H01M 4/54

(21) Application number: 00311738.9

(22) Date of filing: 28.12.2000

(84) Designated Contracting States:
AT BE CH CY DE DK ES FI FR GB GR IE IT LI LU
MC NL PT SE TR
Designated Extension States:
AL LT LV MK RO SI

(30) Priority: 28.12.1999 US 173407 P

(71) Applicant: WILSON GREATBATCH LTD.
Clarence New York 14031 (US)

(72) Inventors:
• Leising, Randolph A.
Williamsville, New York 14221 (US)
• Takeuchi, Esther S.
East Amherst, New York 14051 (US)

(74) Representative: Colmer, Stephen Gary et al
Mathys & Squire
100 Gray's Inn Road
London WC1X 8AL (GB)

(54) Preparation of a mixed metal oxide cathode active material by sequential decomposition and combination reactions

(57) A mixed metal oxide, such as silver vanadium oxide, prepared by sequential decomposition and combination reactions is described. In the case of silver vanadium oxide, the product material is produced from a decomposable salt of silver and vanadium oxide first heated above the decomposition temperature of the silver salt followed by cooling and then a second heating above the decomposition temperature. The product silver vanadium oxide material is coupled with a lithium anode and activated with a nonaqueous electrolyte to provide an improved high energy density electrochemical cell having increased pulse voltages and a reduction in voltage delay.

EP 1 113 514 A1

**Description**

BACKGROUND OF THE INVENTION

1. Field of the Invention

The present invention generally relates to the conversion of chemical energy to electrical energy, and more particularly, to an alkali metal electrochemical cell having a mixed metal oxide cathode activated with a nonaqueous electrolyte. The mixed metal oxide of the cathode is preferably silver vanadium oxide produced in a decomposition reaction followed by a combination reaction.

2. Prior Art

U.S. Patent Nos. 4,310,609 and 4,391,729, both to Liang et al., disclose the preparation of silver vanadium oxide (SVO) as a cathode active material for use in a nonaqueous electrolyte battery. These patents describe the preparation of silver vanadium oxide by a thermal decomposition reaction involving a final heat treatment step of about 360°C.
U.S. Patent, No. 4,830,940 to Keister et al. describes a solid cathode, liquid organic electrolyte, lithium cell for delivering high current pulses. The solid cathode includes as an active material $Ag_xV_2O_y$ wherein x is in the range from about 0.5 to about 2.0 and y is in the range from about 4.5 to 6.0. Keister et al. reference the publication "Effect of Silver Content On the Performance of Primary Lithium/Silver Vanadium Oxide Batteries", Takeuchi et al., *Electrochemical Society,* Oct. 13-18, 1985, Las Vegas, Nevada, Abstract No. 125, which describes the preparation of silver vanadium-oxide at about 360°C from the thermal decomposition of silver nitrate and vanadium pentoxide.
In the publications of Leising et al., *Chemistry* of *Materials,* 5, 738-742 (1993) and Leising et al., *Chemistry of Materials,* 6, 489-495 (1994) the preparation of silver vanadium oxide by the thermal decomposition of $AgNO_3$ and $V_2O_5$ is described.
U.S. Patent No. 5,498,494 to Takeuchi et al., which is assigned to the assignee of the present invention and incorporated herein by reference, describes the preparation of SVO from $Ag_2O$ and $V_2O_5$ by a chemical addition reaction. U.S. Patent No. 5,221,453 to Crespi also discloses the preparation of silver vanadium oxide by a chemical addition reaction (combination of $AgVO_3$ and $V_2O_5$ or $Ag_2O$ and $V_2O_5$) in a temperature range of about 300°C to about 700°C. The preparation of SVO from silver oxide and vanadium oxide also has been well documented in the literature. In the publications: Fleury, P.; Kohlmuller, R. *C.R. Acad. Sci. Paris* 1966, 262C, 475-477 and Casalot, A.; Pouchard, M. *Bull.* Soc. *Chim. Fr.* 1967, 3817-3820 the reaction of silver oxide with vanadium oxide is described, and in Wenda, *E. J. Thermal Anal.* 1985, 30, 879-887, the phase diagram of the $V_2O_5$-$Ag_2O$ system is presented where these materials were heated under oxygen to form SVO and other silver vanadium oxide bronze materials.
In that respect, a chemical addition reaction is described as being distinct from a thermal decomposition reaction. A decomposition reaction is characterized by the evolution of nitrogen oxide gas when the reactants are $V_2O_5$ and $AgNO_3$. A chemical addition reaction does not include the evolution of reaction by-product gases.

SUMMARY OF THE INVENTION

The present invention relates to a nonaqueous electrolyte, alkali metal/mixed metal oxide electrochemical cell and, in particular, a lithium/silver vanadium oxide electrochemical cell designed for high current pulse discharge applications while exhibiting reduced or no appreciable voltage delay. An example of such an application is an implantable cardiac defibrillator, where the battery may run under a light load, device monitoring mode for extended periods of time interrupted by high rate, current pulse discharge during device activation. Voltage delay is a phenomenon typically exhibited in a lithium/silver vanadium oxide cell that has been depleted of about 40% to about 70% of its capacity and is subjected to current pulse discharge applications. The occurrence of voltage delay is detrimental because it may result in delayed device activation and shortened device life.
The desirable decrease in voltage delay is realized in lithium cells that, according to the present invention, contain a mixed metal oxide such as silver vanadium oxide prepared in sequential decomposition and combination reactions, and are activated with a nonaqueous electrolyte. A particularly preferred mixed metal oxide cathode active material produced in this manner comprises silver vanadium oxide having the general formula $Ag_xV_2O_y$ wherein in the ε-phase x = 1.0 and y = 5.5. According to the present invention, this material is produced in a decomposition reaction of a first salt of silver and a second metal oxide by first heating the mixture of starting materials to a temperature above the decomposition temperature of at least one of the two or more reactants. After cooling and grinding the mixture, it is subjected to a second heating during which the combination of starting materials react chemically. A typically used electrolyte for activating the Li/SVO electrochemical couple comprises 1M $LiAsF_6$ dissolved in a 50:50 mixture, by volume, of PC and DME.

These and other aspects of the present invention will become increasingly more apparent to those skilled in the art by reference to the following description and to the appended drawings.

BRIEF DESCRIPTION OF THE DRAWINGS

Fig. 1 is the Differential Thermal Analysis (DTA) curve of a decomposition reaction of $AgNO_3$ and $V_2O$ according to the prior art.

Fig. 2 is the DTA curve of a combination reaction of $\frac{1}{2}Ag_2O$ and $V_2O_5$ according to the prior art.

Fig. 3 is the DTA curve of the sequential decomposition and combination reactions of $\frac{1}{2}Ag_2CO_3$ and $V_2O_5$ according to the present invention.

Figs. 4 and 5 are the SEM micrographs at 100x and 1,000x, respectively, of SVO produced by a decomposition reaction according to the prior art.

Figs. 6 and 7 are the SEM micrographs at 100x and 1,000x, respectively, of SVO produced by a combination reaction according to the prior art.

Figs. 8 and 9 are the SEM micrographs at 100x and 1,000x, respectively, of SVO produced by sequential decomposition and combination reactions according to the present invention.

Figs. 10 and 11 are graphs of the average pulse 1 minima and pulse 4 minima values, respectively, at 55% depth of discharge for Li/SVO cells containing DS-SVO in comparison to D-SVO.

DETAILED DESCRIPTION OF THE PREFERRED EMBODIMENTS

The term "decomposition reaction" means a reaction producing a material, such as silver vanadium oxide, by the decomposition of at least one of two or more reactants during a chemical synthesis. The decomposition liberates a gaseous byproduct which is not incorporated into the product material.

The term "combination reaction" means a reaction producing a material, such as silver vanadium oxide, by the combination of starting materials which react chemically, but do not evolve any gaseous byproducts during the reaction.

The term "sequential decomposition and combination reactions" means a first reaction producing a material, such as silver vanadium oxide, by the decomposition of at least one of two or more reactants during a chemical synthesis. This decomposition reaction produces a gaseous byproduct which is not incorporated into the final product material. The products of the decomposition reaction are subsequently chemically reacted via a combination reaction to produce the product material, such as the product silver vanadium oxide.

In the prior art, SVO prepared by a decomposition reaction has-been termed D-SVO, while SVO prepared by a combination reaction has been called C-SVO. For SVO prepared by the sequential decomposition and combination reactions of the present invention, the resultant material is referred to as DC-SVO.

As used herein, the term "pulse" means a short burst of electrical current of a greater amplitude than that of a prepulse current immediately prior to the pulse. A pulse train consists of at least two pulses of electrical current delivered in relatively short succession with or without open circuit rest between the pulses.

Lower pulse voltages caused by voltage delay, even if only temporary, are undesirable since they can cause circuit failure in device applications,- and effectively result in shorter cell life. As is well known by those skilled in the art, an implantable cardiac defibrillator is a device that requires a power source for a generally medium rate, constant resistance load component provided by circuits performing such functions as, for example, the heart sensing and pacing functions. From time to time, the cardiac defibrillator may require a generally high rate, pulse discharge load component that occurs, for example, during charging of a capacitor in the defibrillator for the purpose of delivering an electrical shock to the heart to treat tachyarrhythmias, the irregular, rapid heartbeats that can be fatal if left uncorrected. Accordingly, reduction and even elimination of voltage delay during a current pulse application is important for proper device operation and extended device life.

The electrochemical cell of the present invention is particularly suited for powering an implantable medical device such as a cardiac defibrillator and the like. The cell comprises an anode of a metal selected from Groups IA, IIA and IIIB of the Periodic Table of the Elements, including lithium, sodium, potassium, etc., and their alloys and intermetallic compounds including, for example, Li-Si, Li-Al, Li-B and Li-Si-B alloys and intermetallic compounds. The preferred anode comprises lithium. An alternate anode comprises a lithium alloy, such as lithium-aluminum alloy. The greater the amount of aluminum present by weight in the alloy, however, the lower the energy density of the cell.

The form of the anode may vary, but preferably the anode is a thin metal sheet or foil of the anode metal, pressed or rolled on a metallic anode current collector, i.e., preferably comprising nickel, to form an anode component. In the exemplary cell of the present invention, the anode component has an extended tab or lead of the same material as the anode current collector, i.e., preferably nickel, integrally formed therewith such as by welding and contacted by a weld to a cell case of conductive material in a case-negative electrical configuration. Alternatively, the anode may be formed in some other geometry, such as a bobbin shape, cylinder or pellet to allow an alternate low surface cell design.

The electrochemical reaction at the cathode involves conversion of ions which migrate from the anode to the cathode into atomic or molecular forms. A preferred cathode active material of the present invention comprises a mixed metal oxide, such as silver vanadium oxide, prepared by sequential decomposition and combination reactions. By way of example, the thermal reaction of silver nitrate with vanadium oxide is a typical decomposition preparation of silver vanadium oxide cathode active material. This decomposition reaction is illustrated below in equation 1.

$$AgNO_3 + V_2O_5 \rightarrow AgV_2O_{5.5} + NO_x \qquad (1)$$

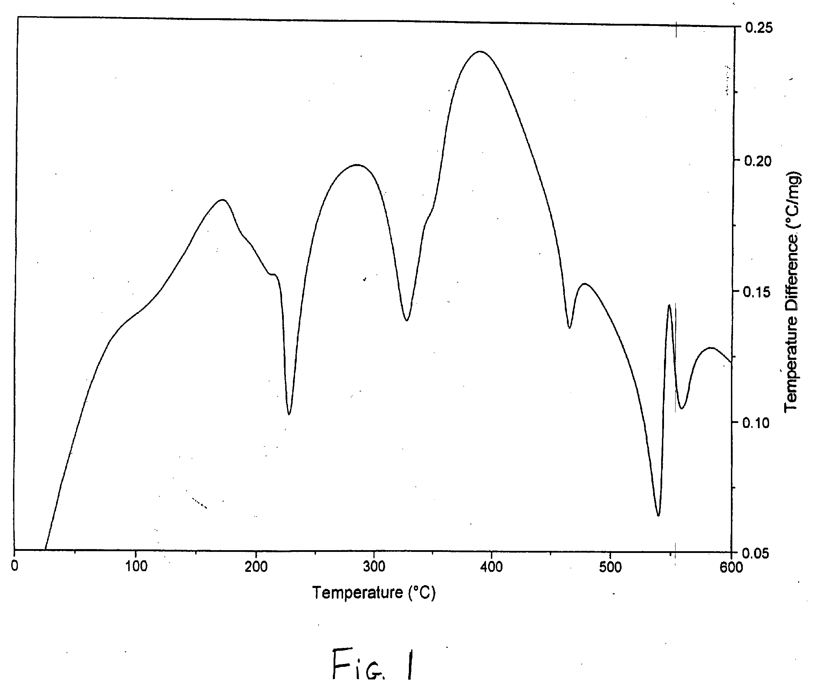

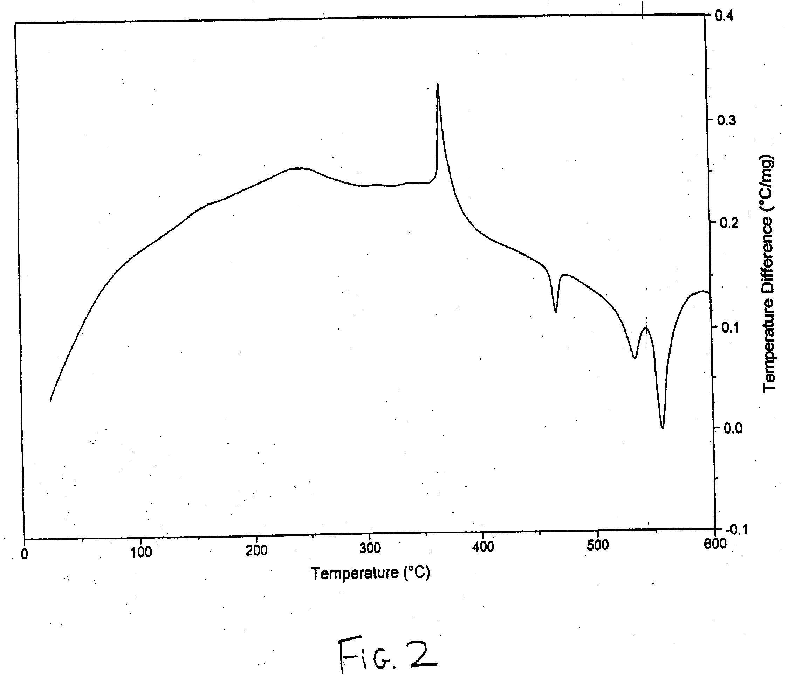

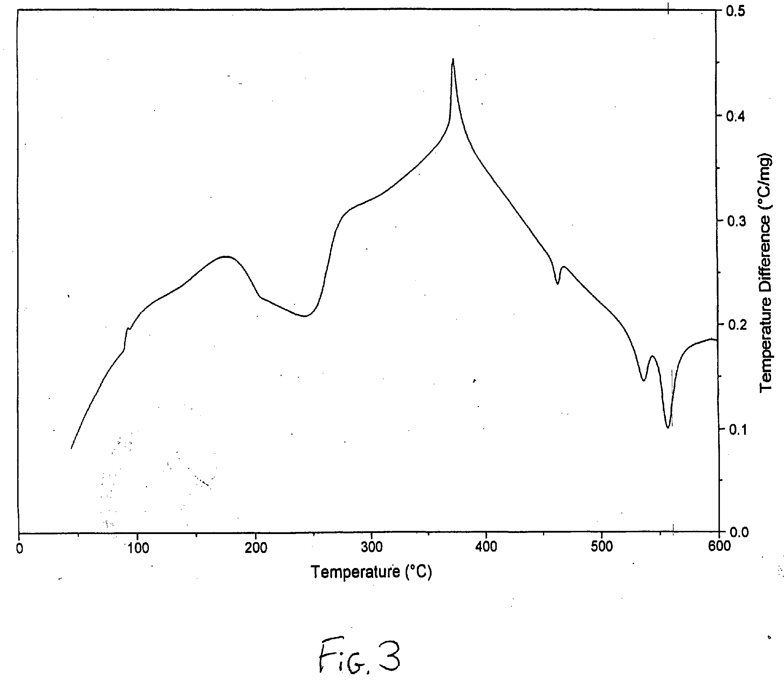

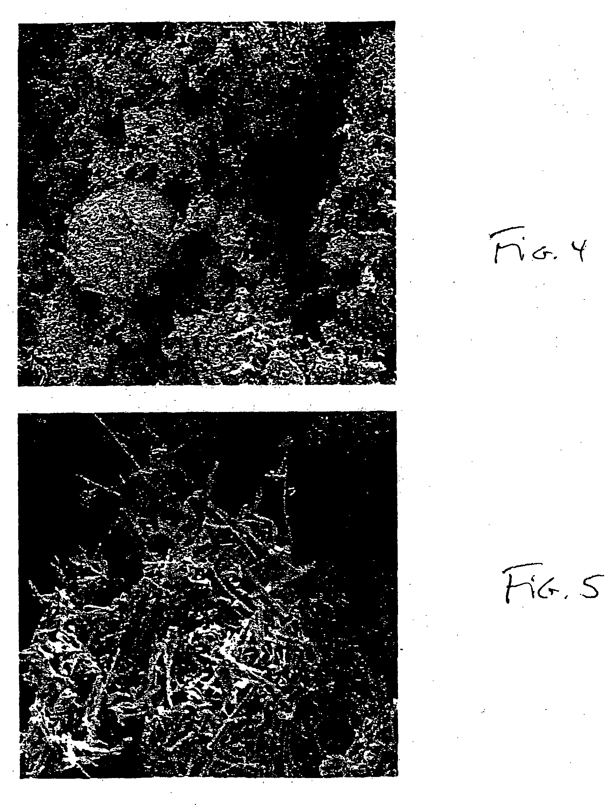

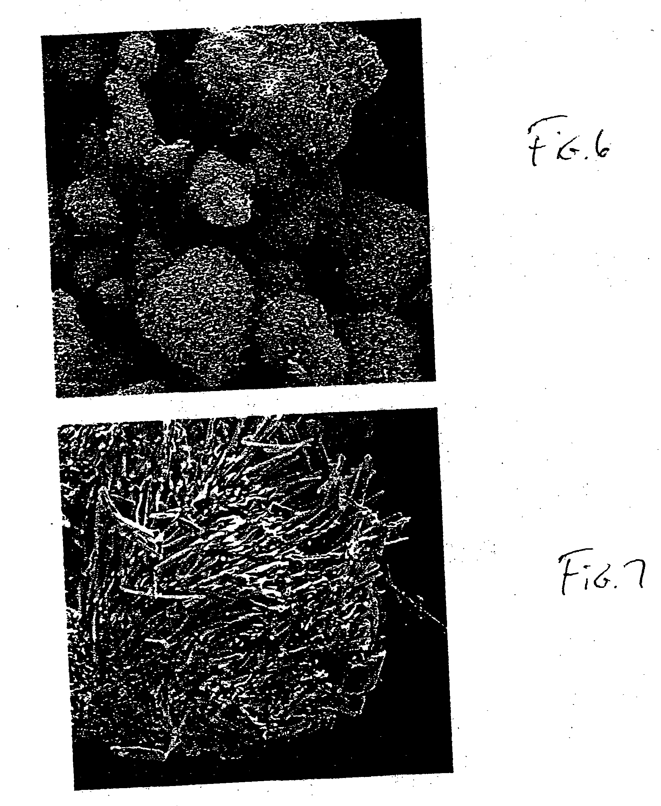

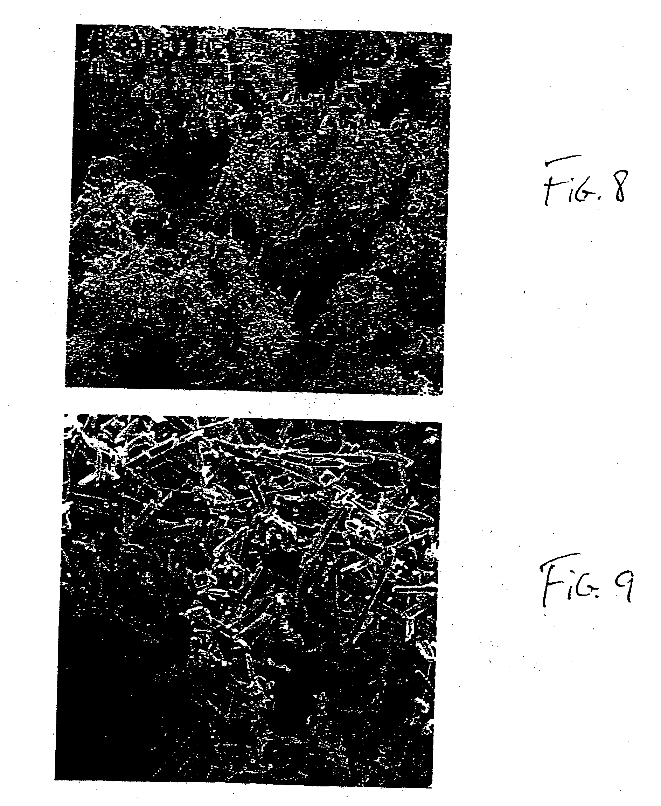

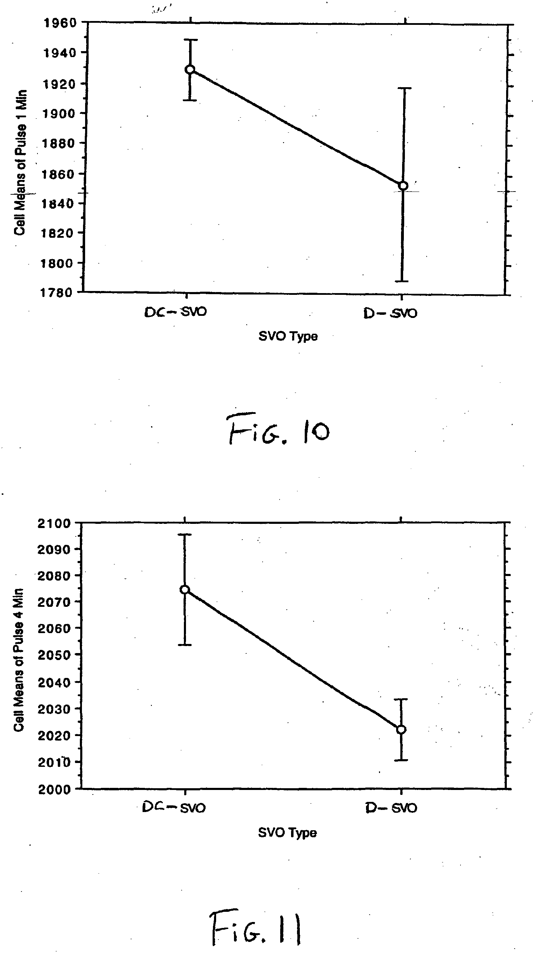

The thermal analysis of this reaction mixture is shown in Fig. 1. In this figure, the broad endothermic transition centered at about 328°C is assigned to the decomposition of silver nitrate in the presence of vanadium oxide. During the decomposition of silver nitrate, toxic $NO_x$ gas is released. At temperatures above 328°C, only the isotherms corresponding to the product silver vanadium oxide phases are seen, indicating that the decomposition reaction is the only mechanism taking place in this synthesis.

By way of another example, the reaction of silver oxide and vanadium oxide is a typical combination reaction for the preparation of silver vanadium oxide. This combination reaction is illustrated below in equation 2.

$$\tfrac{1}{2}Ag_2O + V_2O_5 \rightarrow AgV_2O_{5.5} \qquad (2)$$

The thermal analysis of this combination reaction is shown in Fig. 2. In this figure, the exothermic transition at about 373°C is assigned to the reaction of silver oxide with vanadium oxide. It should be noted that endothermic transitions due to decomposition of the silver starting material are absent in this thermal analysis.

In contrast to the prior art synthesis examples described in equations 1 and 2 above, silver vanadium oxide according to the present invention is prepared utilizing a chemical mechanism of sequential decomposition and combination reactions, *in situ.* Suitable decomposable starting materials include silver carbonate ($Ag_2CO_3$), silver acetate [Ag(CH_3CO_2)] and silver acetylacetonate [(AgCH_3COCH=C(O-)CH_3].

According to the present invention, any one of the decomposable starting materials is provided in a mixture with a metal, a metal oxide or a mixed metal oxide comprising at least a first and a second metals or their oxides and possibly a third metal or metal oxide, or a mixture of a first and a second metals or their metal oxides incorporated in the matrix of a host metal oxide. The cathode active material may also comprise a metal sulfide. The mixture is ground to ensure homogeneity and subsequently subjected to sequential decomposition and combination reactions to provide the novel mixed metal oxide cathode active material of the present invention. Thus, the present synthesis protocol occurs in an oxygen-containing atmosphere at a decomposition heating temperature depending on the decomposable starting material constituent. The exact temperature at which decomposition begins is dictated by the starting materials.

An example of this mechanism is the preparation of SVO from silver carbonate and vanadium oxide as illustrated below in equations 3 and 4.

$$\tfrac{1}{2}Ag_2CO_3 + V_2O_5 \rightarrow \tfrac{1}{2}Ag_2O + \tfrac{1}{2}CO_2 + V_2O_5 \qquad (3)$$

$$\tfrac{1}{2}Ag_2O + V_2O_5 \rightarrow AgV_2O_{5.5} \qquad (4)$$

Equation 3 illustrates the decomposition of silver carbonate to give silver oxide and carbon dioxide. The thermal analysis of this mixture is shown in Fig. 3. In this figure, the endothermic transition at about 243°C is assigned to the decomposition of silver carbonate. Likewise, in Fig. 3 the exotherm at about 373°C is assigned to the combination reaction (equation 4) of silver oxide and vanadium oxide. The silver oxide in this mechanism was produced *in situ* by the decomposition reaction.

Table 1 indicates the temperatures appropriate for the decomposition heating reaction using different silver precursor materials according to the present invention. The maximum temperature is typically 275°C to 500°C above the temperature at which decomposition begins. However,- this temperature range should not be viewed as limiting the present invention. It is merely a recommended temperature range.

Table 1

| Silver Precursor | Decomposition Begins |
|---|---|
| $Ag_2CO_3$ | 218°C |
| $Ag(CH_3CO_2)$ | 225°C |
| $AgCH_3COCH=C(O-)CH_3$ | 100°C |

By way of illustration, and in no way intended to be limiting, one exemplary cathode active material substantially comprises silver vanadium oxide (SVO) having the general formula $Ag_xV_2O_y$ in any one of its phases, i.e., β-phase silver vanadium oxide having in the general formula x = 0.35 and y = 5.18, γ-phase silver vanadium oxide having in the general formula x = 0.80 and y = 5.40 and ε-phase silver vanadium oxide having in the general formula x = 1.0 and y = 5.5, the latter phase being most preferred.

The preparation technique of a mixed metal oxide according to the present invention produces an active material displaying increased capacity and decreased voltage delay in comparison to a mixed metal oxide, such as silver vanadium oxide, prepared by a decomposition synthesis from $AgNO_3$ and $V_2O_5$ starting materials according to the previously referenced U.S. patents to Liang et al. and Keister et al., and the publications to Takeuchi et al. and Leising et al. The discharge capacity and decreased voltage delay of the mixed metal oxide of the present invention is also an improvement over that of silver vanadium oxide typically prepared from $Ag_2O$ and $V_2O_5$ by a chemical addition reaction, such as is described in the previously referenced U.S. patents to Takeuchi et al. and Crespi.

Advantages of the use of this new cathode active material include increased capacity and decreased voltage delay for pulse discharge applications. An example of such an application is the implantable cardiac defibrillator, where the battery may run under a light load for extended periods of time interrupted by high rate pulse discharge. The occurrence of voltage delay under these conditions is detrimental in that it may shorten device life.

The above described active materials are formed into an electrode for incorporation into an electrochemical cell by mixing one or more of them with a conductive additive such as acetylene black, carbon black and/or graphite. Metallic materials such as nickel, aluminum, titanium and stainless steel in powder form are also useful as conductive diluents when mixed with the above listed active materials. The electrode further comprises a binder material which is preferably a fluoro-resin powder such as powdered polytetrafluoroethylene (PTFE) or powdered polyvinylidene fluoride (PVDF). More specifically, a preferred cathode active material comprises SVO in any one of its many phases, or mixtures thereof, mixed with a binder material and a conductive diluent.

A preferred cathode active admixture according to the present invention comprises from about 80% to 99%, by weight, of a cathode active material comprising SVO. The cathode may further comprise a conductive additive or a conductor diluent. The cathode may further comprise a binder. The resulting blended cathode active mixture may be formed into a free-standing sheet prior to being contacted with current collector to form the cathode electrode. The manner in which the cathode active mixture is prepared into free-standing sheet is thoroughly described in U.S. Patent No. 5,435,874 to Takeuchi et., which is assigned to the assignee of the present invention and incorporated herein by reference. Further, cathode components for incorporation into the cell may also be prepared by rolling, spreading or pressing the cathode active mixture of the present invention onto a suitable current collector. Cathodes prepared as described above may be in the form of one or more plates operatively associated with at least one or more plates of anode material, or in the form of a strip wound with a corresponding strip of anode material in a structure similar to a "jellyroll".

In order to prevent internal short circuit conditions, the cathode is separated from the anode material by a suitable separator material.. The separator is of electrically insulative material, and the separator material also is chemically unreactive with the anode and cathode active materials and both chemically unreactive with and insoluble in the electrolyte. In addition, the separator material has a degree of porosity sufficient to allow flow there through of the electrolyte during the electrochemical reaction of the cell. Illustrative separator materials include fabrics woven from fluoropolymeric fibers including polyvinylidine fluoride, polyethylene tetrafluoroethylene, and polyethylenechlorotrifluoroethylene used either alone or laminated with a fluoropolymeric microporous film, non-woven glass, polypropylene, polyethylene, glass fiber materials, ceramics, a polytetrafluoroethylene membrane commercially available under the designation ZITEX (Chemplast Inc.), a polypropylene membrane commercially available under the designation CELGARD (Celanese Plastic Company, Inc.) and a membrane commercially available under the designation DEXIGLAS (C.H. Dexter, Div., Dexter Corp.). The separator may also be composed of non-woven glass, glass fiber materials and ceramic materials.

The form of the separator typically is a sheet which is placed between the anode and cathode-electrodes and in a manner preventing physical contact there between. Such is the case when the anode is folded in a serpentine-like structure with a plurality of cathode plates disposed intermediate the anode folds and received in a cell casing or when the electrode combination is rolled or otherwise formed into a cylindrical "jellyroll" configuration.

The electrochemical cell of the present invention further includes a nonaqueous, ionically conductive electrolyte operatively associated with the anode and the cathode electrodes. The electrolyte serves as a medium for migration of ions between the anode and the cathode during the electrochemical reactions of the cell, and nonaqueous solvents suitable for the present invention are chosen so as to exhibit those physical properties necessary for ionic transport (low viscosity, low surface tension and wettability). Suitable nonaqueous solvents are comprised of an inorganic salt dissolved in a nonaqueous solvent and more preferably an alkali metal salt dissolved in a mixture of aprotic organic solvents comprising a low viscosity solvent including organic esters, ethers and dialkyl carbonates, and mixtures thereof, and a high permittivity solvent including cyclic carbonates, cyclic esters and cyclic amides, and mixtures thereof. Low viscosity solvents include tetrahydrofuran (THF), diisopropylether, methyl acetate (MA), diglyme, triglyme, tetraglyme, 1,2-dimethoxyethane (DME), 1,2-diethoxyethane (DEE), 1-ethoxy,2-methoxyethane (EME), dimethyl carbonate (DMC), diethyl carbonate (DEC), dipropyl carbonate (DPC), ethylmethyl carbonate (EMC), methylpropyl carbonate (MPC), ethylpropyl carbonate (EPC), and mixtures thereof. High permittivity solvents include propylene carbonate (PC), ethylene carbonate (EC), butylene carbonate (BC), acetonitrile, dimethyl sulfoxide, dimethyl formamide, dimethyl acetamide, $\gamma$-valerolactone, $\gamma$-butyrolactone (GBL), N-methyl-pyrrolidinone (NMP), and mixtures thereof.

The preferred electrolyte comprises an inorganic alkali metal salt, and in the case of an anode comprising lithium, the alkali metal salt of the electrolyte is a lithium based salt. Known lithium salts that are useful as a vehicle for transport of alkali metal ions from the anode to the cathode include $LiPF_6$, $LiBF_4$, $LiASF_6$, $LiSbF_6$, $LiClO_4$, $LiAlCl_4$, $LiGaCl_4$, $LiC(SO_2CF_3)_3$, $LiN(SO_2CF_3)_2$, LiSCN, $LiO_3SCF_2CF_3$, $LiC_6F_5SO_3$, $LiO_2CCF_3$, $LiSO_3F$, $LiNO_3$, $LiO_2$, $LiB(C_6H_5)_4$, $LiCF_3SO_3$, and mixtures thereof. Suitable salt concentrations typically range between about 0.8 to 1.5 molar.

In the present invention, the preferred electrochemical cell has an anode of lithium metal and a cathode of the transition mixed metal oxide $AgV_2O_{5.5}$ prepared by sequential decomposition and combination reactions, as previously described in detail. The activating electrolyte is 1.0M to 1.4M $LiAsF_6$ dissolved in an aprotic solvent mixture comprising at least one of the above listed low viscosity solvents and at least one of the above listed high permittivity solvents having an organic carbonate additive provided therein. The preferred aprotic solvent mixture comprises a 50/50 mixture, by volume, of propylene carbonate and dimethoxyethane.

The assembly of the cell described herein is preferably in the form of a wound element cell. That is, the fabricated cathode, anode and separator are wound together in a "jellyroll" type configuration or "wound element cell stack" such that the anode is on the outside of the roll to make electrical contact with the cell case in a case-negative configuration. Using suitable top and bottom insulators, the wound cell stack is inserted into a metallic case of a suitable size dimension. The metallic case may comprise materials such as stainless steel, mild steel, nickel-plated mild steel, titanium, tantalum or aluminum, but not limited thereto, so long as the metallic material is compatible for use with components of the cell.

The cell header comprises a metallic disc-shaped body with a first hole to accommodate a glass-to-metal seal/terminal pin feedthrough and a second hole for electrolyte filling. The glass used is of a corrosion resistant type having up to about 50% by weight silicon such as CABAL 12, TA 23 or FUSITE 425 or FUSITE 435. The positive terminal pin feedthrough preferably comprises titanium although molybdenum, aluminum, nickel alloy, or stainless steel can also be used. The cell header comprises elements having compatibility with the other components of the electrochemical cell and is resistant to corrosion. The cathode lead is welded to the positive terminal pin in the glass-to-metal seal and the header is welded to the case containing the electrode stack. The cell is thereafter filled with the electrolyte solution comprising at least one of the carbonate additives described hereinabove and hermetically sealed such as by close-welding a stainless steel ball over the fill hole, but not limited thereto.

The above assembly describes a case-negative cell, which is the preferred construction of the exemplary cell of the present invention. As is well known to those skilled in the art, the exemplary electrochemical system of the present invention can also be constructed in a case-positive configuration.

The following examples describes the manner and process of an electrochemical cell according to the present invention, and they set forth the best mode contemplated by the inventors for carrying out the invention, but they are not to be construed as limiting.

EXAMPLE I

SVO materials were prepared by the three mechanisms described above. D-SVO was prepared using a 1:1 ratio of silver nitrate and vanadium oxide, C-SVO was prepared using a 1:2 ratio of silver oxide and vanadium oxide, and DC-SVO was prepared using a 1:2 ratio of silver carbonate and vanadium oxide. The ratio of silver starting materials to vanadium oxide was chosen in each of these preparations to give a constant Ag/V ratio of 1:2 in the final SVO product. All three preparations involved mixing the starting materials and heating the samples to 500°C under an air atmosphere. After about 16 hours of heating, the samples were cooled, mixed again and reheated to 500°C for about 32 hours. SEM micrographs were obtained for the final SVO products and are displayed in Figs. 4 to 9.

In Figs. 4 and 5, the respective 100x and 1000x magnifications of the prior art D-SVO material prepared from silver nitrate and vanadium oxide are illustrated. Differences can be seen in these micrographs when compared to those in Figs. 6 and 7 for the respective 100x and 1,000x photographs of prior art C-SVO prepared from silver oxide and vanadium oxide. In particular, the agglomerates of particles in C-SVO are more compact than the agglomerates of particles in D-SVO. This result is attributed to the different nature of the mechanisms. In the decomposition mechanism, $NO_x$ gas is released during the reaction creating disorder on a nano scale, and resulting in less order in the agglomerates of particles than seen for C-SVO. Interestingly, the SEM micrographs of DC-SVO prepared from silver carbonate and vanadium oxide according to the present invention and presented in Figs. 8 and 9 show that DC-SVO has similarities to both the D-SVO and C-SVO samples. At a low magnification of 100x (Fig. 8) the agglomerates of particles of DC-SVO resemble those found for D-SVO. This is likely a result of the decomposition step inherent in both mechanisms. At high magnification of 1000x (Fig. 9), however, the individual DC-SVO particles more resemble those seen for C-SVO, indicating that the combination mechanism occurring for both DC-SVO and C-SVO has a similar influence on the individual particle size and morphology.

EXAMPLE II

The performance of Li/SVO cells was tested using DC-SVO of the present invention in comparison to prior art D-SVO. In particular, hermetically-sealed electrochemical cells were constructed having cathodes consisting of a mixture of 94% of SVO (by weight) along with 3% Teflon 7A® , 2% graphite, and 1% carbon black. This active mixture was pressed onto an expanded titanium current collector. A total of 7.9 grams of cathode mix was utilized in each cell. The cathodes were separated from the lithium anode by a polypropylene separator. Lithium metal in contact with an expanded nickel current collector was placed against the separator facing the cathode. The cells were filled with 1M $LiAsF_6$ in PC/DME (1:1) electrolyte.

The cells were subjected to constant current pulses of 2.0 Amps for 10 sec in duration. The current pulses were applied in groups of four every 30 minutes at 37°C. This rapid discharge lasted about 3 days. The pulse testing results are listed in Table 2.

Table 2

| Pulse Discharge of Experimental Li/SVO Cells | | | |
|---|---|---|---|
| SVO Type | Capacity (mAh) to: | | |
| | +2.0V | +1.7V | +1.5V |
| DC-SVO | 1615 | 1730 | 1778 |
| D-SVO | 1548 | 1723 | 1787 |

As can be seen in Table 2, the capacity of the cells on short term discharge is very similar. On average, the cells utilizing DC-SVO give slightly higher capacity when discharge is stopped at a +2.0V cutoff. At +1.7V and +1.5V cutoffs, the delivered capacity of the cells were virtually identical.

EXAMPLE III

Li/SVO cells identical to those described in Example II were constructed and placed on long term test. These cells were subjected to constant current pulses of 2.0 Amps for 10 seconds in duration as before, but the length of time between groups of 4 pulses was extended to 2 months. In addition, the cells were placed on a 17.4 kΩ background load during storage time between pulse trains. The longer duration of this test better represents the type of use the cells will experience in a biomedical device. Five cells utilizing DC-SVO cathodes and five cells with D-SVO cathodes were placed on test at 37°C. The results of the pulse discharge at about 46% and 55% depth of discharge (DOD) are given in Table 3. Average pulse 1 minima (Plmin) and pulse 4 minima (P4min) values at 55% depth of discharge (DOD) are plotted with 95% confidence limits in Figs. 10 and 11, respectively.

Table 3

| Pulse Discharge of Experimental Li/SVO Cells On Long Term Test | | | | |
|---|---|---|---|---|
| SVO Type | DOD | Capacity(mAh) | | |
| | | Prepulse (mV) | Pulse 1 Min(mV) | Pulse 4 Min (mV) |
| DC-SVO | 46% | 2602 | 1971 | 2183 |

Table 3   (continued)

| Pulse Discharge of Experimental Li/SVO Cells On Long Term Test | | | | |
|---|---|---|---|---|
| SVO Type | DOD | Capacity(mAh) | | |
| | | Prepulse (mV) | Pulse 1 Min(mV) | Pulse 4 Min (mV) |
| D-SVO | 46% | 2596 | 1962 | 2175 |
| DC-SVO | 55% | 2594 | 1929 | 2075 |
| D-SVO | 55% | 2564 | 1853 | 2022 |

As can be seen in Table 3, DC-SVO cells on long term discharge provide higher pulse minimum voltages than cells using D-SVO. These higher voltages represent an increase in the energy provided by the DC-SVO cells relative to the D-SVO cells. This in turn improves the operation of the device using these batteries. In addition, higher voltages result in higher capacity delivered by the cells, and longer run time for the device.

Thus, according to the present invention, the use of SVO prepared from sequential decomposition and combination reactions provides the benefits of increased pulse voltages and less voltage delay in comparison to SVO material prepared according to the prior art. Lower pulse voltages caused by voltage delay, even if only temporary, are undesirable since they can cause circuit failure in device applications, and effectively result in shorter cell life.

It is appreciated that various modifications to the present inventive concepts described herein may be apparent to those of ordinary skill in the art without disparting from the spirit and scope of the present invention as defined by the herein appended claims.

**Claims**

1.   An electrochemical cell which comprises an anode; a cathode; and an electrolyte operatively associated with the anode and the cathode wherein the cathode comprises a mixed metal oxide producible by sequential decomposition and combination reactions of a mixture of a first decomposable metal-containing constituent and a second metal oxide constituent.

2.   An electrochemical cell according to claim 1 wherein the mixture of the first and second constituents has been heated to a first temperature above a decomposition temperature of the decomposable metal-containing constituent, followed by cooling to below the decomposition temperature and then heated to a second temperature above the decomposition temperature.

3.   An electrochemical cell according to claim 1 or claim 2 wherein the first and second temperatures are substantially the same.

4.   An electrochemical cell according to claim 1 or claim 2 wherein the first and second temperatures are different.

5.   An electrochemical cell according to any preceding claim wherein the first temperature is at least 100°C.

6.   An electrochemical cell according to any preceding claim wherein the first temperature is from 275°C to 500°C.

7.   An electrochemical cell according to any preceding claim wherein the second temperature is from 275°C to 500°C.

8.   An electrochemical cell according to any preceding claim wherein the sequential decomposition and combination reactions are carried out in an atmosphere selected from the group consisting of air and oxygen.

9.   An electrochemical cell according to any preceding claim wherein the mixture is ground between being heated to the first temperature and being heated to the second temperature.

10.   An electrochemical cell according to any preceding claim wherein the mixed metal oxide is silver vanadium oxide.

11.   An electrochemical cell according to claim 10 wherein the cathode comprises, as the mixed metal oxide, silver vanadium oxide producible by sequential decomposition and combination reactions of a first silver salt, as first decomposable metal-containing constituent, and a second metal oxide constituent.

12. An electrochemical cell according to any preceding claim wherein the mixed metal oxide is producible from a thermally decomposable salt of silver, as decomposable metal-containing constituent, selected from the group consisting of $Ag_2CO_3$, $Ag(CH_3CO_2)$, $AgCH_3COCH=C(O-)CH_3$, and mixtures thereof.

13. An electrochemical cell according to claim 12 wherein the second metal oxide constituent is vanadium pentoxide.

14. An electrochemical cell according to any of claims 10 to 13 wherein the silver vanadium oxide is substantially of the general formula $Ag_xV_2O_y$ selected from one of an $\varepsilon$-phase with x = 1.0 and y = 5.5, $\gamma$-phase with x = 0.80 and y = 5.40, $\beta$-phase with x = 0.35 and y = 5,18, and mixtures thereof.

15. An electrochemical cell according to any preceding claim wherein the anode comprises an alkali metal.

16. An electrochemical cell according to claim 15 wherein the anode is lithium.

17. An electrochemical cell according to any preceding claim wherein the electrolyte is a non-aqueous electrolyte.

18. An electrochemical cell according to claim 17 wherein the non-aqueous electrolyte has a Group IA metal salt dissolved therein.

19. An electrochemical cell according to claim 17 or 18 wherein the nonaqueous electrolyte comprises a low viscosity solvent selected from the group consisting of an ester, an ether, a dialkyl carbonate, and mixtures thereof.

20. An electrochemical cell according to claim 17 or 18 wherein the nonaqueous solvent comprises a high permittivity solvent selected from the group consisting of a cyclic carbonate, a cyclic ester, a cyclic amide, and mixtures thereof.

21. An electrochemical cell according to any preceding claim wherein the electrolyte is selected from the group consisting of $LiPF_6$, $LiAsF_6$, $LiSbF_6$, $LiBF_4$, $LiClO_4$, $LiAlCl_4$, $LiGaCl_4$, $LiC(SO_2CF_3)_2$, $LiN(SO_2CF_3)_2$, $LiSCN$, $LiO_3SCF_2CF_3$, $LiC_6F_5SO_3$, $LiO_2CCF_3$, $LiSO_3F$, $LiNO_3$, $LiB(C_6H_5)_4$, $LiCF_3SO_3$, and mixtures thereof.

22. A method for reducing the voltage delay in an electrochemical cell, comprising the steps of:

    a) providing an anode;
    b) providing a cathode comprising a mixed metal oxide produced by sequential decomposition and combination reactions from a first salt of silver as a decomposable metal-containing constituent and a second metal oxide constituent, wherein a mixture of the first and second constituents is heated to a first temperature above a decomposition temperature of the decomposable metal-containing constituent, followed by cooling to below the decomposition temperature and then heating to a second temperature above the decomposition temperature; and
    c) activating the electrochemical cell with the electrolyte operatively associated with the anode and the cathode.

23. A method according to claim 22 wherein the anode or the cathode or the electrolyte or any process parameter is defined in any one of claims 2 to 21.

FiG. 1

Fig. 2

Fig. 3

FIG. 4

FIG. 5

FIG.6

FIG.7

FiG. 8

FiG. 9

FiG. 10

FiG. 11

| | European Patent Office | EUROPEAN SEARCH REPORT | Application Number EP 00 31 1738 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 695 892 A (TAKEUCHI ESTHER S ET AL) 9 December 1997 (1997-12-09) | 1,8,10, 13,17-21 | H01M4/48 H01M4/54 |
| A | * column 3, line 19 - column 4, line 23 * | 2-7,9, 11,12, 14-16, 22,23 | |
| | * column 4, line 66 - column 5, line 45 * * example 1 * | | |
| A | EP 0 856 490 A (MEDTRONIC INC) 5 August 1998 (1998-08-05) * column 1, line 8 - column 2, line 21 * * example 1 * * claim 1 * | 1-23 | |
| A | US 4 391 729 A (LIANG CHARLES C ET AL) 5 July 1983 (1983-07-05) * column 1, line 43 - line 68 * * column 3, line 8 - line 36 * * example 1 * | 1-23 | |

TECHNICAL FIELDS SEARCHED (Int.Cl.7)

H01M

The present search report has been drawn up for all claims

| Place of search | Date of completion of the search | Examiner |
|---|---|---|
| THE HAGUE | 9 April 2001 | Métais, S |

**ANNEX TO THE EUROPEAN SEARCH REPORT
ON EUROPEAN PATENT APPLICATION NO.** EP 00 31 1738

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2001

| Patent document cited in search report | | Publication date | Patent family member(s) | | Publication date |
|---|---|---|---|---|---|
| US 5695892 | A | 09-12-1997 | NONE | | |
| EP 0856490 | A | 05-08-1998 | US | 5895733 A | 20-04-1999 |
| | | | US | 6093506 A | 25-07-2000 |
| US 4391729 | A | 05-07-1983 | US | 4310609 A | 12-01-1982 |
| | | | AU | 541718 B | 17-01-1985 |
| | | | AU | 6119580 A | 25-06-1981 |
| | | | CA | 1147385 A | 31-05-1983 |
| | | | DE | 3031554 A | 25-06-1981 |
| | | | FR | 2471673 A | 19-06-1981 |
| | | | GB | 2065957 A,B | 01-07-1981 |
| | | | IL | 60748 A | 30-03-1984 |
| | | | JP | 1028464 B | 02-06-1989 |
| | | | JP | 1545264 C | 15-02-1990 |
| | | | JP | 56093266 A | 28-07-1981 |
| | | | MX | 157494 A | 28-11-1988 |
| | | | NL | 8006638 A,B, | 16-07-1981 |
| | | | SE | 451920 B | 02-11-1987 |
| | | | SE | 8005496 A | 18-06-1981 |